# EUROPEAN PATENT SPECIFICATION

(11) **EP 3 076 299 B1**
(45) Date of publication and mention of the grant of the patent: **30.12.2020**
(21) Application number: 16163607.1
(22) Date of filing: 01.04.2016
(51) Int. Cl.: G06F 11/22

(54) **METHOD TO IMPROVE AND EXTEND THE LOGICS OF A TEST RIG FOR A VEHICLE COMPONENT, IN PARTICULAR A BATTERY OR AN ALTERNATOR**
VERFAHREN ZUR VERBESSERUNG UND ERWEITERUNG DER LOGIK EINES PRÜFSTANDS FÜR EINE FAHRZEUGKOMPONENTE, INSBESONDERE EINER BATTERIE ODER EINES WECHSELSTROMGENERATORS
PROCÉDÉ POUR AMÉLIORER ET PROLONGER LA LOGIQUE D'UN BANC D'ESSAI POUR UN COMPOSANT DE VÉHICULE, EN PARTICULIER UNE BATTERIE OU UN ALTERNATEUR

(30) Priority: 03.04.2015 IT TO20150199
(43) Date of publication of application: 05.10.2016
(73) Proprietor: IVECO S.p.A., 10156 Torino (IT)
(72) Inventor: LAMBERTO, Rocco, 10098 Rivoli (IT)
(74) Representative: Bongiovanni, Simone

(56) References cited:
- FR-A1- 2 921 170
- GB-A- 2 516 355
- US-A1- 2014 100 737

## Description

The present invention relates to a method to improve and extend the logics of a test rig for a vehicle component, in particular a battery or an alternator.
Rigs for testing a vehicle component, in particular a battery or an alternator, are known wherein the test rig is provided with a software residing in a memory area that implements, under the control of a microprocessor unit, a plurality of testing functions addressable in different operating positions of the memory area. These test functions are selected according to pre-set programs in order to implement given logics that establish operations on electrical or mechanical components, for example a predetermined number of cycles of battery charging and discharging.
In many operating conditions the test logics originally provided by the test rig manufacturer turn out to be limited and therefore insufficient for verification and validation of a particular vehicle component that was not originally established as an item to be tested.
There is therefore a need to be able to extend the test logics originally established in a test rig and implement the new ones. In particular, there is a need to extend the test logics and implement the new ones without requiring modifications to the hardware and software architecture of the test rig, thus using functions already implemented in its core software.

The present invention meets this requirement in that it relates to a method to improve and extend the logics of a test rig for a vehicle component of the type claimed in claim 1.

### Prior art documents:

Document US2014/100737 discloses a system for the diagnosis of a component of a motor vehicle that includes a sever configured to provide at least one test sequence for diagnosing the component and at least one execution parameter allocated to the test sequence. The system also includes a diagnostic device configured to receive the test sequences and the execution parameters, and to convert it into a runtime script and execute the runtime script accordingly. A script generation device is configured to generate the test sequences as OTX script or as ETX script.

Document GB2516355 discloses another method and system for diagnosing faults of a component of a vehicle.

Document FR2921170 discloses an automatic test program generating method for operating software of logic controller in aircraft, involving generating program by analyzing states and generating code at respective time periods, and executing generated program in the environment.

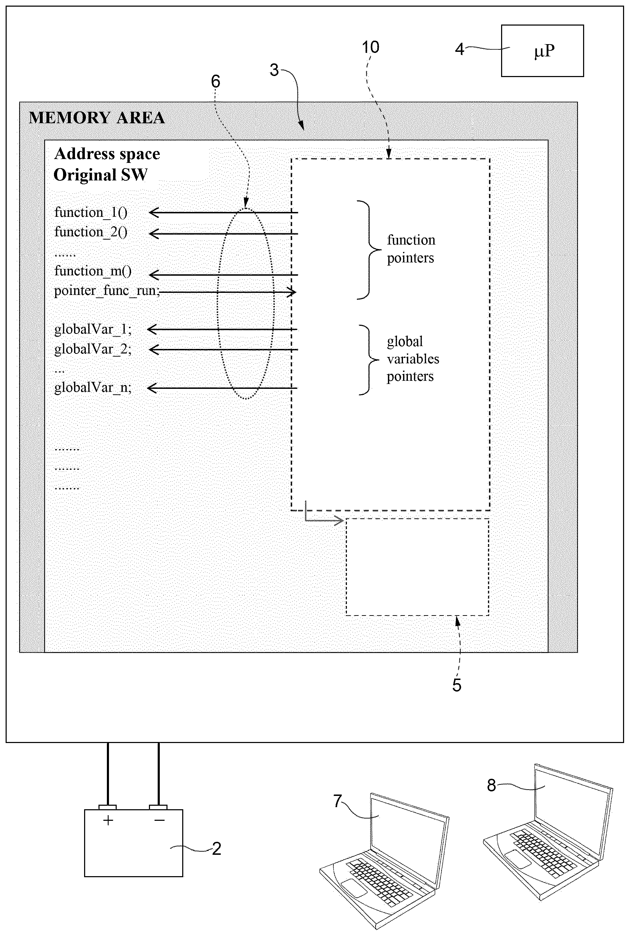

The invention will now be illustrated with reference to the attached figure which represents, schematically, a preferred non-limiting exemplary form of the invention. The figure shows, schematically, a test rig 1 of an electrical / electromechanical vehicle component 2, in particular a battery or an alternator, wherein the test rig 1 is provided with a software residing in a memory area 3 that implements, under the control of a microprocessor unit 4, a plurality of original functions designed to carry out operations and testing and addressable in different operating positions of the memory area. The execution of these original functions allows a complete testing step, for example a cycle of charging and discharging a battery, to be carried out for the component 2.

The test rig 1 is of known type and therefore will not be further detailed.

In order to expand the test logics established in the original test rig 1 and to create new ones by calling the functions originally implemented, the method as defined in claim 1 is proposed.

Accordingly the functions established in the test rig 1 can be called by defining updated test logics without making changes to either the hardware or software of the test rig and therefore with reduced costs.

The original logics implemented by the test rig 1 will still be available.
The script 5 can be created in offline mode by means of a dedicated processor 7 disconnected from the test rig 1 or can be created in online mode by means of a peripheral processor 8 connected to the test rig 1 via the network.
The following entities, among other things, are defined in the script 5:
- functions;
- constructs;
- global variables which are defined at the test rig level. These are resident in the software of the test rig 1 and are used in the script 5 via their pointer, obtained through library functions 10 which establishes the mapping;
- local variables which are defined only at the script level;
- comments.

In particular, step e) comprises the steps of running the functions and utilizing the global variables through the pointer according to the order established by the script 5 and using the local variables defined only in the script 5 to execute, through the test rig 1, operations not established in the original software.

For example, the var keyword followed by the variable name, which must not contain names or special characters, can be used to define each variable.
The following are examples of functions:
- wait (milliseconds) - this function pauses execution of the script code;
- ampere_hours = sum_Ah ( ) - calculates the capacity lost or increased since the beginning of the test;
- set_start_record (freq) - this function specifies the frequency with which data should be recorded;
The following are examples of global variables that could be used in the case of battery testing:
- _time_ = time in milliseconds
- _volt_ = battery voltage
- _current_ = charging or discharging current
- _temp_ = battery temperature
- _stopExe_ = execution state
- _tempOfTank_ = temperature of the tank containing the battery
- _levelOfTank_ = water level in the tank containing the battery
The following are examples of constructs:
- if (condition);
- end_if;
- for (start_val , end_val , step) and end_for;
- while (condition) and end_while;
The following is an example of a script (which performs mathematical operations):
I. ;------------------------------------------
II. ; TEST No.3
III. ;------------------------------------------
IV. ; File: test_3.bt
V. log(test_3.txt,"--------------------",null);
VI. log(test_3.txt," START test_3.bt - fibonacci numbers ",null);
VII. log(test_3.txt,"--------------------",null);
VIII. var fib;
IX. var fib1;
X. var fib2;
XI. var N;
XII. var i;
XIII. N=20;
XIV. fib1=0;
XV. fib2=1;
XVI. i=0;
XVII. while(i<N);
XVIII. fib = fib1 + fib2;
XIX. log(test_3.txt, "", fib);
XX. i=i+1;
XXI. fib2 = fib1;
XXII. fib1 = fib;
XXIII. end_while;
XXIV. log(test_3.txt,"The fibonacci number is : ",fib);
XXV. end_script;
A parsing step is also established wherein the script 5, after it has been generated, is loaded, displayed and each line in the script checked for consistency of the code; in case of inconsistency an error signal is generated that prevents the execution of steps c)-e). A file with the extension .err that contains any errors found is usually generated.
There are numerous benefits to using the method of the present invention, notably:
1) By means of the external software component 10 and script 5, new test logics can be executed without the need to modify the original software of the test rig 1;
2) As a result of what is noted in point (1), the present method brings about a reduction of the management costs of the test rig 1;
3) As a result of what is noted in point (1), it is not necessary to perform validation testing on the original software of test rig 1 each time software component 10 is updated.
4) Changes of test logics can be made quickly without waiting for the test rig supplier to reprogram the test rig in order to implement the new logics;
5) The installation of software component 10 is very simple: this operation involves copying the file containing component 10 into the appropriate folder so that the core software can find it in order to load it into memory area 3.
6) If a specific investigation is required, it is not necessary to transmit the know-how to suppliers, the logics are implemented in pseudo code (and therefore simple) in the scripts.
7) The scripts are easy to write and it is also possible to create them with only a text editor such as notepad.exe, without the need for a specialised software development environment (such as Visual Studio for C#, C++, etc.).
8) The test rig nevertheless continues to implement the functions established by the manufacturer since the functions established by the script sit alongside the original functions (i.e. do not replace them).
9) The test rig software must "dynamically" load into memory the library 10 that manages the callbacks 6 and the pointers to the global variables, and controls and executes the script. The "dynamic" rather than static use of the library enables separation of possible developments of the management of the script from the implementation of the test rig software.

## Claims

1. Method to improve and extend the logics of a test rig (1) for a vehicle component (2), in particular a battery or an alternator, wherein the test rig is provided with an original software residing in a memory area (3) that implements, under the control of a microprocessor unit (4), a plurality of original functions - Fl, F2, ... Fn - designed to carry out operation and testing and addressable in different operating positions of the memory area,
the method being **characterised in that** it comprises the steps of:
a) creating a script (5) using a pseudo code and according to a specific syntax developing an updated test function, said script providing a new sequence of the original functions ;
b) loading said script (5) into said memory area;
c) starting said script (5);
d) running the script (5) implementing the updated test function defined in the same script;
e) loading into the memory area an external software component (10) that is a Dynamic Link Library - DLL - which defines a plurality of function pointers, callbacks (6), each of which addresses an original function - F1, F2, ... Fn - of the resident software; said external software component being capable of executing said script, recognizing the functions called in the script itself and for each function called, executing that function using the test rig and calling it by use of said function pointer; said functions being thus executed by the test rig (1) according to the sequence provided by the script and using the variables defined in the script itself to execute by means of the test rig test logics not provided in the original software.

2. Method according to claim 1, wherein said script defines global variables, i.e. variables defined at test rig level; said global variables reside in the software of the test rig and are used in the script through their pointer, obtained via the functions of the library that performs the mapping; and local variables, i.e. variables defined only at script level;
the said step e) comprising the steps of running the functions and utilizing the global variables through said pointer according to the order established by the script (5) and using the
local variables defined only in the script to execute, through said test rig (1), operations not provided in the original software.

3. Method according to claim 1 or 2, wherein the script is created in offline mode using a dedicated processor (7) disconnected from the test rig (1).

4. Method according to claim 1, wherein the script is created in online mode using a peripheral processor (8) connected via the network to the test rig.

5. Method according to claim 1, wherein the step of creating the script (5) comprises the step of:
defining a plurality of functions;
defining a plurality of constructs;
defining a plurality of global variables
defining a plurality of local variables;
defining a plurality of comments.

6. Method according to claim 1 wherein a parsing step is provided in which said script (5) is loaded, displayed and the compatibility of the code is checked, generating, in the case of incompatibility, an error signal that prevents the execution of steps c)-e).

## Patentansprüche

1. Verfahren zum Verbessern und Erweitern der Logik eines Prüfstandes (1) für eine Fahrzeugkomponente (2), insbesondere für eine Batterie oder einen Wechselstromgenerator, wobei der Prüfstand mit einer Originalsoftware ausgeführt ist, die in einem Speicherbereich (3) liegt, der, unter der Steuerung einer Mikroprozessoreinheit (4), eine Mehrzahl von Ursprungsfunktionen - F1, F2, ... Fn - implementiert, die zum Betrieb und Testen ausgeführt sind und in verschiedenen Betriebspositionen des Speicherbereichs adressierbar sind,
wobei das Verfahren **dadurch gekennzeichnet ist, dass** es die Schritte umfasst:
a) Erstellen eines Skripts (5) unter Verwendung eines Pseudocodes und gemäß einer spezifischen Syntax, die eine aktualisierte Testfunktion entwickelt, wobei das Skript eine neue Sequenz der ursprünglichen Funktionen bereitstellt;
b) Laden des Skripts (5) in den Speicherbereich;
c) Starten des Skripts (5);
d) Ausführen des Skripts (5) zur Implementierung der aktualisierten Testfunktion, die in demselben Skript definiert ist;
e) Laden einer externen Softwarekomponente (10) in den Speicherbereich, die eine dynamische Verknüpfungsbibliothek (dynamic link library) - DLL - ist, welche eine Mehrzahl an Funktionszeigern, Rückrufen (callbacks) (6) definiert, die jeweils eine Ursprungsfunktion - F1, F2, ... Fn - der residenten Software adressieren; wobei die externe Softwarekomponente ausgeführt ist, um das Skript auszuführen, die im Skript aufgerufenen Funktionen zu erkennen und für jede aufgerufene Funktion diese auf dem Prüfstand auszuführen und die Funktion durch Nutzung des Funktionszeigers aufzurufen; wobei die Funktionen anschließend durch den Prüfstand (1) nach der vom Skript bereitgestellten Sequenz ausgeführt werden und die im Skript definierten Variablen selbst verwendet werden, um sie durch Mittel der Prüfstandlogiken auszuführen, die nicht von der Originalsoftware bereitgestellt werden.

2. Verfahren nach Anspruch 1, wobei das Skript globale Variablen definiert, d.h. Variablen, die auf Prüfstandsebene definiert sind, wobei die globalen Variablen in der Software des Prüfstands enthalten sind und im Skript durch ihren Zeiger verwendet werden, der durch die Funktionen der Bibliothek, welche das Mapping durchführt, erhalten wird, sowie lokale Variablen, d.h. Variablen, die nur auf Skriptebene definiert sind; wobei der Schritt e) die Schritte des Ausführens der Funktionen und des Verwendens der globalen Variablen mittels des Zeigers entsprechend der durch das Skript (5) festgelegten Reihenfolge, und des Verwendens der lokale Variablen, die nur in dem auszuführenden Skript definiert sind, umfasst, um durch den Prüfstand (1) Operationen, die in der ursprünglichen Software nicht enthalten waren, auszuführen.

3. Verfahren nach Anspruch 1 oder 2, wobei das Skript in einem Offline-Modus unter Verwendung eines dedizierten Prozessors (7) erzeugt wird, der vom Prüfstand (1) getrennt ist.

4. Verfahren nach Anspruch 1, wobei das Skript in einem Online-Modus unter Verwendung eines Peripherieprozessors (8) erzeugt wird, der über das Netzwerk mit dem Prüfstand verbunden ist.

5. Verfahren nach Anspruch 1, wobei der Schritt der Erstellung des Skripts (5) die Schritte des:
Definierens einer Mehrzahl von Funktionen;
Definierens einer Mehrzahl von Konstruktionen;
Definierens einer Mehrzahl von globalen Variablen;
Definierens einer Mehrzahl von lokalen Variablen;
Definierens einer Mehrzahl von Kommentaren;
umfasst.

6. Verfahren nach Anspruch 1, wobei ein Parsingschritt bereitgestellt ist, in dem das Skript (5) geladen wird, dargestellt wird und die Kompatibilität des Codes geprüft wird, wobei, im Falle der Inkompatibilität, ein Fehlersignal generiert wird, das die Ausführung des Schritte c) bis e) verhindert.

## Revendications

1. Méthode pour améliorer et prolonger la logique d'un banc d'essai (1) pour un composant de véhicule (2), en particulier une batterie ou un alternateur, dans laquelle le banc d'essai est pourvu d'un logiciel original résidant dans une zone de mémoire (3) qui met en œuvre, sous le contrôle d'une unité à microprocesseur (4), une pluralité de fonctions originales - F1, F2, ... Fn - conçues pour effectuer des opérations et des tests et adressables dans différentes positions de fonctionnement de la zone de mémoire,
la méthode étant **caractérisée en ce qu'**elle comprend les étapes suivantes :
a) créer un script (5) utilisant un pseudo-code et, selon une syntaxe spécifique, développer une fonction de test mise à jour, ledit script fournissant une nouvelle séquence des fonctions originales ;
b) charger ledit script (5) dans ladite zone de mémoire ;
c) lancer ledit script (5) ;
d) exécuter le script (5) mettant en œuvre la fonction de test mise à jour définie dans le même script ;
e) charger, dans la zone de mémoire, un composant logiciel externe (10) qui est une bibliothèque de liens dynamiques - DLL - qui définit une pluralité de pointeurs de fonction, des rappels automatiques (6), dont chacun adresse une fonction originale - F1, F2, ... Fn - du logiciel résident ; ledit composant logiciel externe étant apte à exécuter ledit script, reconnaître les fonctions appelées dans le script lui-même, et pour chaque fonction appelée, exécuter cette fonction en utilisant le banc d'essai, et l'appeler en utilisant ledit pointeur de fonction ; lesdites fonctions étant ainsi exécutées par le banc d'essai (1) selon la séquence fournie par le script et en utilisant les variables définies dans le script lui-même pour exécuter au moyen du banc d'essai des logiques de test non fournies dans le logiciel original.

2. Méthode selon la revendication 1, dans laquelle ledit script définit des variables globales, c'est-à-dire des variables définies à un niveau de banc d'essai ; lesdites variables globales résident dans le logiciel du banc d'essai et sont utilisées dans le script à travers leur pointeur, obtenu via les fonctions de la bibliothèque qui réalise le mappage ; et des variables locales c'est-à-dire des variables définies uniquement à un niveau de script ;
ladite étape e) comprenant les étapes d'exécution des fonctions et d'utilisation des variables globales à travers ledit pointeur selon l'ordre établi par le script (5) et en utilisant les variables locales définies uniquement dans le script pour exécuter, à travers ledit banc d'essai (1), des opérations non prévues dans le logiciel original.

3. Méthode selon la revendication 1 ou 2, dans laquelle le script est créé en mode hors ligne en utilisant un processeur dédié (7) déconnecté du banc d'essai (1).

4. Méthode selon la revendication 1, dans laquelle le script est créé en mode en ligne en utilisant un processeur périphérique (8) connecté via le réseau au banc d'essai.

5. Méthode selon la revendication 1, dans laquelle l'étape de création du script (5) comprend les étapes suivantes :
définir une pluralité de fonctions ;
définir une pluralité de constructions ;
définir une pluralité de variables globales ;
définir une pluralité de variables locales ;
définir une pluralité de commentaires.

6. Méthode selon la revendication 1 dans laquelle une étape d'analyse est prévue, dans laquelle ledit script (5) est chargé, affiché et la compatibilité du code est vérifiée, générant, en cas d'incompatibilité, un signal d'erreur qui empêche l'exécution des étapes c) à e) .
